# EUROPÄISCHE PATENTANMELDUNG

(11) **EP 0 642 097 A1**
(43) Veröffentlichungstag der Anmeldung: **08.03.1995**
(21) Anmeldenummer: 94113625.1
(22) Anmeldetag: 31.08.1994
(51) Int. Cl.: G06K 11/18, G06F 3/12

(54) **Beschriftungsanlage**

(30) Priorität: 03.09.1993 DE 9313287 U
(71) Anmelder: Kleine, Götz Dipl.-Volksw., D-80798 München (DE)
(72) Erfinder: Kleine, Dipl.-Volksw. Götz, D-80798 München (DE); Sprengel, Kurt, D-33647 Bielefeld (DE)
(74) Vertreter: Zeitler & Dickel

(57) **Zusammenfassung**

Bei einer Beschriftungsanlage zum Ausdruck von Informationen, die über einen PC bearbeitet oder erstellt sind, ist die Anordnung derart getroffen, daß eine zusätzliche Eingabe/Ausgabe-Einheit (10) über eine serielle Schnittstelle an den Rechner (12) angeschlossen ist.

## Beschreibung

Die Erfindung betrifft eine Beschriftungsanlage zum Ausdruck von Informationen, die über einen Personalcomputer (PC) bearbeitet oder erstellt sind.

Es besteht häufig das Bedürfnis, Informationen oder Instruktionen in Abhängigkeit von bestimmten Eingaben auszudrucken, ohne hierfür den Drucker eines Computers einsetzen zu müssen.

Der Erfindung liegt dementsprechend die Aufgabe zugrunde, eine Beschriftungsanlage der eingangs genannten Art zur Verfügung zu stellen, die in der Lage ist, die Tastendrukker parallel zu der normalen PC-Tastatur an den PC zu leiten, Zeilen zu drucken und die normalen Mausfunktionen auszuführen.

Gelöst wird diese Aufgabe gemäß der Erfindung durch die im Kennzeichen des Hauptanspruches angegebenen Merkmale, wobei hinsichtlich bevorzugter Ausgestaltungen der erfindungsgemäßen Beschriftungsanlage auf die Merkmale der Unteransprüche verwiesen wird.

Nach der Erfindung ist eine zusätzliche Eingabe/Ausgabe-Einheit vorgesehen, die über eine serielle Schnittstelle an den Rechner angeschlossen ist. Gemäß einer bevorzugten Ausgestaltung der Erfindung umfaßt die Einheit eine Tastatur, einen Drucker und eine Maussteuerung. Die Tastatur besteht vorteilhafterweise aus 18 frei wählbaren Tasten und zwei Maustasten. Bei dem Drucker handelt es sich vorzugsweise um einen Tintenstrahldrucker, der den gesamten ASCII-Zeichensatz zeilenweise auszudrucken vermag. Vorteilhafterweise ist die Maussteuerung umschaltbar zwischen Drucksteuerung und normaler Mausfunktion für den PC. Durch Umschalten dient die Tastatur als normale Maus.

Mit der Anlage werden Daten eingegeben, die von einem Programm im PC zu prüfen und zu verarbeiten sind. Nach Beendigung der Eingabe werden beliebige Daten zum Druck an die Anlage weitergegeben. Diese Daten werden dann mit dem Tintenstrahldrucker zeilenweise auf das zu beschriftende Gut übertragen. Dabei dient die Maus zur Führung wie auch zur Verhinderung von Datenverlusten.

Zwischen der Eingabe/Ausgabe-Einheit ist zweckmäßig eine Elektronikeinheit angeschlossen. Die Elektronikeinheit ist zum einen mit der Tastatur und zum weiteren mit der normalen PC-Tastatur sowie einer in den PC eingebauten seriellen Schnittstelle verbunden.

Vorzugsweise besitzt die Eingabe/Ausgabe-Einheit eine eigene Stromversorgung. Diese macht die Anlage unabhängig von der verfügbaren Leistung des PC.

Das Gerät läßt sich mit einer Hand bedienen und verfügt über die Modi/Eingabe, Drucken und Mausfunktionen. Die Steuerung der Modi erfolgt über ein im PC aktiviertes Programm, das von jedem beliebigen anderen PC-Programm aufgerufen werden kann, um den jeweiligen Arbeitsmodus festzulegen. Das Steuerprogramm wird nach dem erstmaligen Aufruf speicherresident. Neben der Festlegung des jeweiligen Arbeitsmodus werden durch entsprechende Parameterangaben auch die Tastenbelegungen der Beschriftungsanlage bestimmt.

Diese Belegung kann während des normalen Betriebes jederzeit geändert werden.

Im Eingabemodus werden die Daten über die Elektronikeinheit parallel an die Tastatur des PC in den Tastaturpuffer übergeben. Mit Ausnahme der zwei Maustasten können die Tasten frei belegt werden. Die eingegebenen Daten werden von dem PC so behandelt, als ob sie über die normale PC-Tastatur eingegeben werden. Ein beliebiges PC-Programm prüft die Daten und übernimmt die üblichen Funktionen im PC.

Durch Umschalten wird das Gerät in den Druckmodus versetzt. Es können nun zeilenweise beliebige Ausgaben über die serielle Schnittstelle an die Steuerelektronik übergeben werden. Diese Ausdrücke müssen nicht mit der Eingabe über die Tastatur der Beschriftungsanlage in Zusammenhang stehen. Im Druckmodus werden die Daten im Gerät gepuffert. Der eigentliche Druck wird durch eine der Maustasten ausgelöst. Um ein gleichmäßiges Druckbild zu ermöglichen und den Datenverlust zu verhindern, übernimmt die Maus in diesem Arbeitsmodus die Steuerung der Druckbewegung. Sofern Daten aufgrund von Umgebungseinflüssen, wie beispielsweise einem schlechten Druckuntergrund, verlorengehen, können diese Ausgaben beliebig oft wiederholt werden. Unterbrochene Drucke können durch einen Steuerbefehl gestoppt werden bei gleichzeitigem Löschen des Druckerpuffers.

Der Arbeitsmodus als normale Maus wird ebenfalls über das speicherresidente Steuerprogramm im PC festgelegt. In diesem Fall übernimmt die in der Anlage eingebaute Maus die üblichen Mausfunktionen. Eine Eingabe über die Tasten der Tastatur ist dabei weiterhin gegeben. Somit kann während des Mausbetriebes auch ein Umschalten des Mausbetriebes in einen anderen Modus erfolgen.

Weitere Vorteile, Einzelheiten und erfindungswesentliche Merkmale ergeben sich aus der nachfolgenden Beschreibung einer bevorzugten Ausführungsform der erfindungsgemäßen Beschriftungsanlage unter Bezugnahme auf die beigefügten Zeichnungen. Dabei zeigen im einzelnen:
- Fig. 1: eine schematische Darstellung der Beschriftungsanlage mit Elektronikeinheit und PC,
- Fig. 2: die Draufsicht auf die Beschriftungsanlage und
- Fig. 3: einen vertikalen Längsschnitt durch die Beschriftungsanlage gemäß Fig. 2.

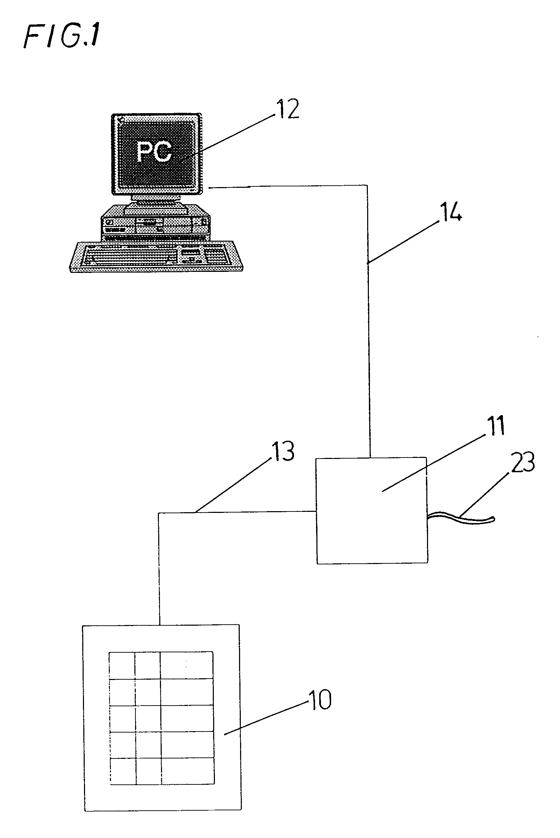

Die in Fig. 1 lediglich schematisch dargestellte und in ihrer Gesamtheit mit der Bezugsziffer 10 versehene Eingabe/Ausgabe-Einheit ist über eine Verbindungsleitung 13 an eine Elektronikeinheit 11 angeschlossen. Die Elektronikeinheit 11 stellt über eine weitere Verbindungsleitung 14 einen Anschluß zur normalen PC-Tastatur des PC 12 her sowie zu einer in den PC eingebauten seriellen Schnittstelle.

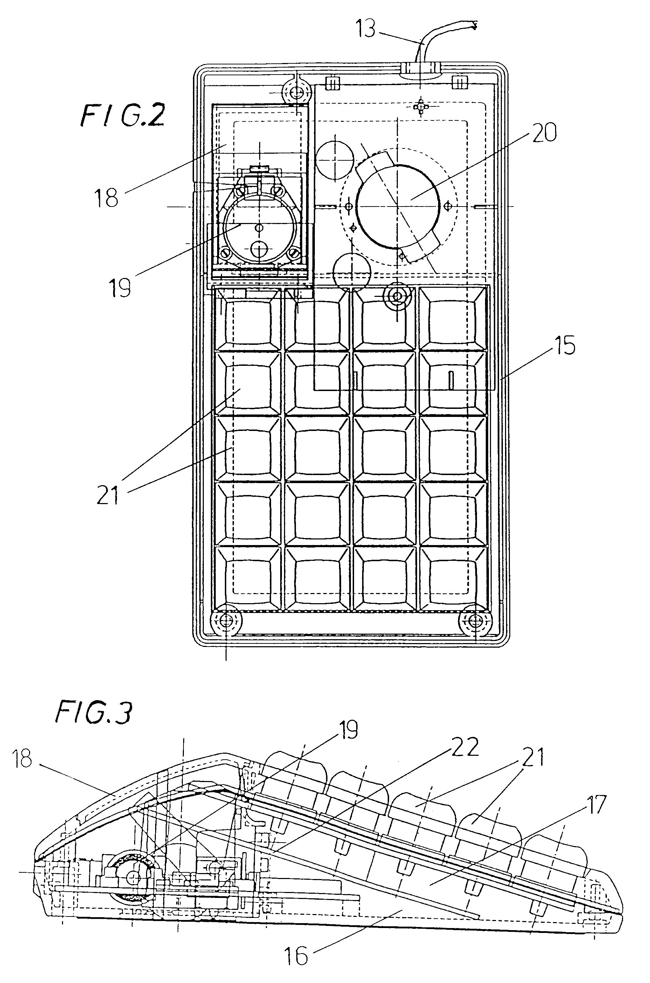

Der Aufbau der Eingabe/Ausgabe-Einheit 10 soll nachfolgend unter Bezugnahme auf die Figuren 2 und 3 näher erläutert werden. Das Gerät ist in einem Kunststoffgehäuse 15 untergebracht. Das Gehäuse 15 besteht aus einem Unterteil 16, einem Oberteil 17 sowie einem Deckel 18. Im Unterteil 16 des Gehäuses 15 ist ein Drucker 19 angeordnet, der als Tintenstrahldruckwerk ausgebildet ist. Der Drucker 19 ist über den Deckel 18 zugänglich, um eine Wartung durchzuführen oder die Tintenpatrone zu wechseln.

Des weiteren ist im Unterteil 16 des Gehäuses 15 eine Maussteuerung 20 angeordnet, die vom Unterteil 16 des Gehäuses 15 aus bedienbar ist.

Auf der vorderen Oberfläche des Oberteils 17 des Gehäuses 15 befindet sich die Tastatur 21. Die Tastatur 21 umfaßt achtzehn frei bedienbare Tasten sowie zwei feste Maustasten. Ferner ist innerhalb des Gehäuses 15 eine Multiplexplatine 22 angeordnet, die die Verteilung der Signale von und zu der Steuerelektronik übernimmt.

Ein im einzelnen nicht dargestelltes Signalkabel verbindet das Gerät mit der Steuerelektronik. Über ein in Fig. 1 angedeutetes Kabel 23 ist ein Netzanschluß gegeben zur unabhängigen Stromversorgung des Gerätes.

Es soll an dieser Stelle noch einmal ausdrücklich angegeben werden, daß es sich bei der vorangehenden Beschreibung lediglich um eine solche beispielhaften Charakters handelt und daß verschiedene Abänderungen und Modifikationen möglich sind, ohne dabei den Rahmen der Erfindung zu verlassen.

## Patentansprüche

1. Beschriftungsanlage zum Ausdruck von Informationen, die über einen PC bearbeitet oder erstellt sind,
**gekennzeichnet durch**
eine zusätzliche Eingabe/Ausgabe-Einheit (10), die über eine serielle Schnittstelle an den Rechner (12) angeschlossen ist.

2. Beschriftungsanlage nach Anspruch 1, dadurch gekennzeichnet, daß die Eingabe/Ausgabe-Einheit (10) eine Tastatur (21) umfaßt.

3. Beschriftungsanlage nach einem der Ansprüche 1 oder 2, dadurch gekennzeichnet, daß die Eingabe/Ausgabe-Einheit (10) einen Drucker (19) umfaßt.

4. Beschriftungsanlage nach Anspruch 3, dadurch gekennzeichnet, daß der Drucker (19) als Tintenstrahldruckwerk ausgebildet ist.

5. Beschriftungsanlage nach einem der vorangehenden Ansprüche, dadurch gekennzeichnet, daß die Eingabe/Ausgabe-Einheit (10) eine Maussteuerung (20) enthält.

6. Beschriftungsanlage nach Anspruch 5, dadurch gekennzeichnet, daß die Maussteuerung (20) umschaltbar ist zwischen Drucksteuerung und normaler Mausfunktion für den PC (12).

7. Beschriftungsanlage nach einem der vorangehenden Ansprüche, dadurch gekennzeichnet, daß die Tastatur (21) achtzehn frei wählbare Tasten und zwei Maustasten umfaßt.

8. Beschriftungsanlage nach einem der vorangehenden Ansprüche, dadurch gekennzeichnet, daß die Steuerelektronik (11) eine eigene Stromversorgung (23) besitzt.
